# EUROPEAN PATENT APPLICATION

(11) **EP 2 387 919 A1**
(43) Date of publication of application: **23.11.2011**
(21) Application number: 10731181.3
(22) Date of filing: 05.01.2010
(51) Int. Cl.: A47G 23/08

(54) **FOOD AND DRINK CONVEYING DEVICE**

(30) Priority: 16.01.2009 JP 2009007636
(71) Applicant: Ishino Seisakusyo Co., Ltd., Ishikawa 921-8025 (JP)
(72) Inventor: ISHINO Haruki, Kanazawa-shi Ishikawa 921-8025 (JP); SASAHARA Shintaro, Kanazawa-shi Ishikawa 921-8025 (JP); YOSHIDA Toshihiro, Kanazawa-shi Ishikawa 921-8025 (JP)
(74) Representative: Staudt, Hans-Peter
(86) International application number: PCT/JP2010/050031
(87) International publication number: WO 2010/082512

(57) **Abstract**

An object of the invention is to provide a food and drink conveying device for allowing a traveling body to travel stably along a traveling lane without guide portions protruding, the guide portions being provided along the traveling lane at the ends in the direction of the width. The food and drink conveying device has a traveling lane 1a, a conveying and driving body (15) provided along the traveling lane (1a), a traveling body (7) that can travel along the traveling lane (1a) with food and drink (9) placed on it, and connecting means (18, 19) for connecting the conveying and driving body (15) to the traveling body (7) so as to drive the traveling body (7), and the traveling body (7) travels along the traveling lane (1a) when the conveying and driving body (15) is driven.

## Description

### Technical Field

The present invention relates to a food and drink conveying device for allowing a conveying body to travel along a conveying path by driving a conveying and driving body.

### Background Art

Conventional food and drink conveying devices have: a loop chain (conveying and driving body) that runs when driven by a drive motor, not shown; a conveying path (traveling lane) for conveying food and drink, for example, sushi, from the kitchen to a customer; and a tray (traveling body) having wheels which travels on a traveling surface formed on a flat portion of the conveying path with a dish for food and drink, for example, sushi, placed on the top. In some of these food and drink conveying devices, a first magnetic body having magnetism is provided beneath the tray and a number of second magnetic bodies having magnetism opposite to that of the first magnetic body are provided along the chain at constant intervals so that the magnetic force generated between the first magnetic body and the second magnetic bodies is used to allow the tray to run along the conveying path (see, for example, Patent Document 1).

### Prior Art Document

### Patent Document

Patent Document 1: Japanese Unexamined Patent Publication 2004-16464 (page 4, FIG. 2)

### Summary of the Invention

### Problem to Be Solved by the Invention

In the food and drink conveying device in Patent Document 1, however, it is necessary for guide portions to protrude along the conveying path at the two ends in the direction of the width of the conveying path in order to allow the tray (traveling body) to travel stably along the conveying path (traveling lane) so that the tray is guided between these guide portions. Therefore, the width of the conveying path is greater than the width of the tray, and a problem arises such that the customers may feel uncomfortable.

The present invention is provided in view of this problem, and an object of the invention is to provide a food and drink conveying device for allowing a traveling body to travel stably along a traveling lane without guide portions protruding, the guide portions being provided along the traveling lane at the ends in the direction of the width.

### Means for Solving Problem

In order to achieve the above described object, the food and drink conveying device according to Claim 1 of the present invention is a food and drink conveying device having: a traveling lane; a conveying and driving body provided along the above described traveling lane; a traveling body that can travel along the above described traveling lane with food and drink placed on the traveling body; and a connecting means for connecting the above described conveying and driving body to the above described traveling body in order to drive the above described traveling body, so that the above described traveling body travels along the above described traveling lane when the above described conveying and driving body is driven, and is **characterized in that** the above described traveling body comprises a swaying preventing means for preventing the above described traveling body from swaying in the direction of the width by holding the above described traveling lane from both sides in the direction of the width.
As a result of this characteristic, the swaying preventing means allows the traveling body to travel stably along the traveling lane without guide portions protruding from both sides of the traveling lane in the direction of the width along the traveling lane, and thus the customers do not feel uncomfortable.

The food and drink conveying device according to Claim 2 is the food and drink conveying device according to Claim 1 and is **characterized in that** the above described swaying preventing means comprises a rotatable body which is pivotally supported around an axis so as to be freely rotatable and is placed so as to make contact with or be in the proximity to the above described traveling lane.
As a result of this characteristic, the traveling body makes contact with the traveling lane through the rotatable body, and thus abnormal noise due to friction between the traveling body and the traveling lane can be prevented. In the case where the rotatable body is placed in the proximity of the traveling lane, the rotatable body immediately makes contact with the traveling lane so as to suppress the swaying of the traveling body when the traveling body begins to sway so that the traveling body can travel while the abnormal noise is suppressed.

The food and drink conveying device according to Claim 3 is the food and drink conveying device according to Claim 1 or 2 and is **characterized in that** two swaying preventing means, including the above described swaying preventing means, are provided in the front and rear of the above described traveling body
As a result of this characteristic, the swaying preventing means in the two portions, front and rear, of the traveling body can hold the traveling lane from both sides, and therefore the traveling body can be prevented from swaying in the direction of the width without fail.

The food and drink conveying device according to Claim 4 is the food and drink conveying device according to any of Claims 1 to 3 and is **characterized in that** the above described connecting means is magnetic bodies provided in the above described traveling body and the above described conveying and driving body, respectively.
As a result of this characteristic, the traveling body and the conveying and driving body are connected through magnetic force from the magnetic bodies, and therefore it is not necessary to make connection between the traveling body and the conveying and driving body directly through a bracket or the like for conveying the drive of the conveying and driving body to the traveling body, and thus a slit or the like is not necessary in the conveying path for moving the bracket or the like in the longitudinal direction.

The food and drink conveying device according to Claim 5 is the food and drink conveying device according to any of Claims 1 to 4 and is **characterized in that** the above described traveling body is placed in the direction perpendicular to the above described conveying and driving body.
As a result of this characteristic, the conveying and driving body is not provided in the direction of the width of the traveling body, and therefore the width of the traveling lane can be made short.

The food and drink conveying device according to Claim 6 is the food and drink conveying device according to any of Claims 3 to 5 and is **characterized in that** the above described swaying preventing means provided in two locations, in the front and rear of the above described traveling body, are individually pivotally supported around an axis so as to be rotatable in the direction parallel to the above described traveling body.
As a result of this characteristic, when the traveling body passes through a curved path where the traveling lane is bent and the swaying preventing means in the front of the traveling body rotates along the form of the curved path of the traveling lane, the swaying preventing means in the rear can also rotate along the traveling lane, and therefore the traveling body can travel smoothly through the traveling lane having a curved path.

### Brief Description of the Drawings

FIG. 1 is a plan diagram showing the entirety of the food and drink conveying device according to the first embodiment;
FIG. 2 is a plan diagram showing an ordered food and drink conveying path which is partially exposed;
FIG. 3 is an exploded perspective diagram showing the traveling body;
FIG. 4 is a side diagram showing the traveling body in a straight path of the ordered food and drink conveying path;
FIG. 5 is a plan diagram showing the traveling body in a straight path of the ordered food and drink conveying path;
FIG. 6 is a cross sectional diagram along A-A in FIG. 2;
FIG. 7 is a cross sectional diagram along B-B in FIG. 2;
FIG. 8 is a plan diagram showing the traveling body in the first corner of the ordered food and drink conveying path;
FIG. 9 is a perspective diagram showing the traveling body according to the second embodiment;
FIG. 10 is a cross sectional diagram showing the food and drink conveying device according to the second embodiment in a state where the traveling body is in use;
FIG. 11 is a conceptual diagram showing a modification of the traveling body and the ordered food and drink conveying path;
FIG. 12 is a conceptual diagram showing another modification of the traveling body and the ordered food and drink conveying path;
FIG. 13 is a conceptual diagram showing still another modification of the traveling body and the ordered food and drink conveying path;
FIG. 14 is a conceptual diagram showing yet another modification of the traveling body and the ordered food and drink conveying path;
FIG. 15 is a conceptual diagram showing still yet another modification of the traveling body and the ordered food and drink conveying path; and
FIG. 16 is a conceptual diagram showing another modification of the traveling body and the ordered food and drink conveying path.

### Best Mode for Carrying Out the Invention

The best mode for carrying out the food and drink conveying device according to the present invention is described below on the basis of the embodiments.

### First Embodiment

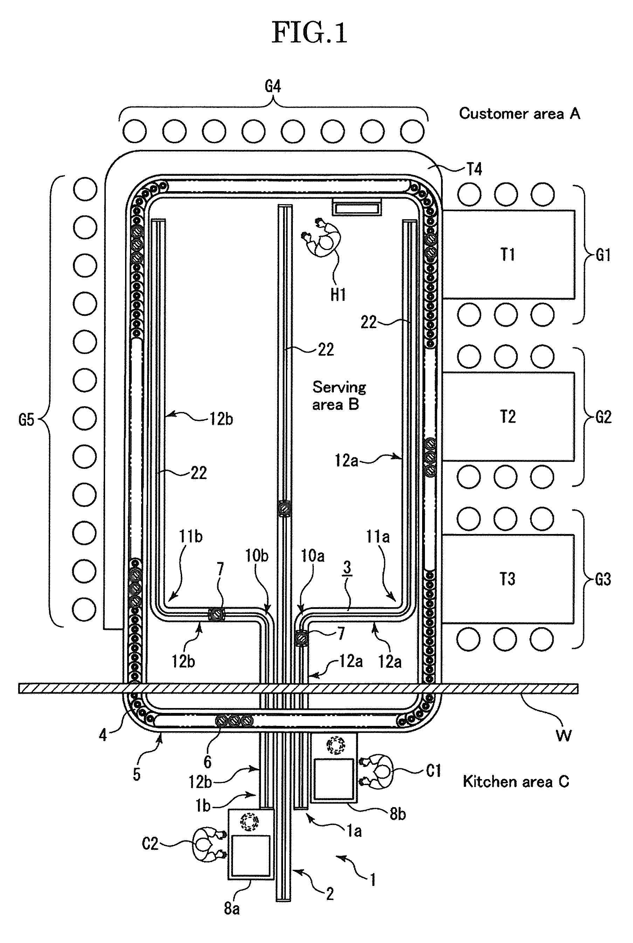

The food and drink conveying device according to the first embodiment is described in reference to FIGS. 1 to 8. Here, in the present embodiment, the direction in which the traveling body travels along the ordered food and drink conveying path from the kitchen area to the customer area is the direction in which the traveling body moves forward. First, the symbol 1 in FIG. 1 is a food and drink conveying device to which the present invention is applied. This food and drink conveying device 1 is provided with ordered food and drink conveying paths 1a, 1b and 2, which make up the traveling lane in the present invention, that cover the kitchen area C where the kitchen staff C1, C2 and the like prepare sushi and other food and drinks, and the customer area A where customers eat and drink in a conveyor-belt sushi restaurant, for example.

A looped conveying path 5 in rectangular form as viewed from the top is installed around the ordered food and drink conveying paths 1a, 1b and 2 and along the tables T1, T2, T3 and T4 in the customer area A. The looped conveying path 5 is provided with a crescent chain conveyor 4, which is looped and can rotate, so that dishes 6 on which food and drink are placed are conveyed along this crescent chain conveyor 4 continuously when the crescent chain conveyor 4 is driven.

In the conveyor-belt sushi restaurant where such a looped conveying path 5 is installed, the customers can eat and drink by removing the food and drink conveyed along the looped conveying path 5, and when customers want to eat food or have a drink of something that is not conveyed on the looped conveying path 5, an individual order can be placed to the staff or through an ordering device, not shown.

The thus individually ordered food and drink are placed on any of the ordered food and drink conveying paths 1a, 1b and 2 within the kitchen area C after being prepared in the kitchen area C, and then conveyed to the vicinity of the customer who placed the order.

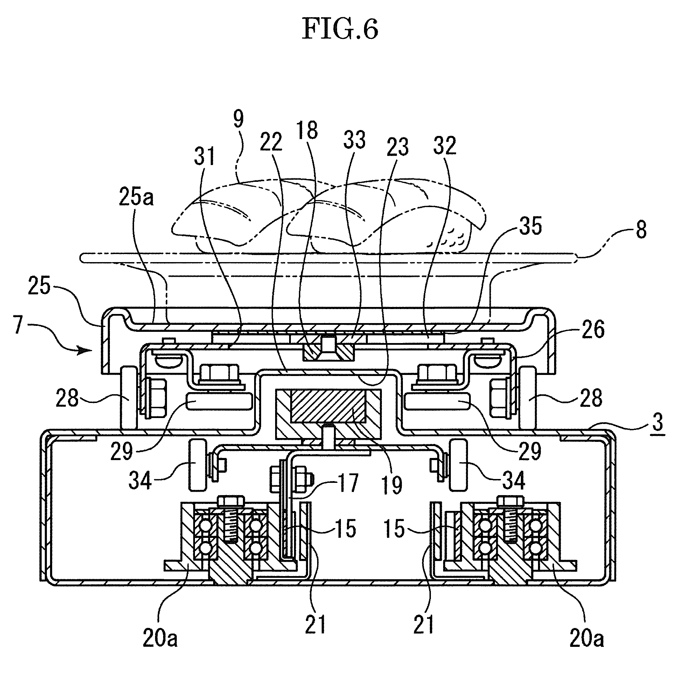

Concretely, when an order is placed from a customer in the customer area A, kitchen staff C1, C2 or the like in the kitchen area C behind the partition wall W prepare the ordered food and drink 9 on the preparation table 8a or 8b and place it on a dish 6, and after that, as described below, place the dish 6 on the traveling body 7 which is provided so as to freely travel forwards and backwards on the conveying surface 3 along the ordered food and drink conveying paths 1a, 1b and 2 (see FIG. 6).

Next, the ordered food and drink 9 placed on the traveling body 7 is conveyed to a serving area B through the ordered food and drink conveying paths 1a, 1b or 2. At this time, the ordered food and drink 9 that has been conveyed through the ordered food and drink conveying path 1a or 1b can be removed from the ordered food and drink conveying path 1a or 1b directly by the customer in the area G1, G2, G3 or G5, while the ordered food and drink 9 that has been conveyed through the ordered food and drink conveying path 2 is conveyed to the service staff H1, who distributes it to the customer.

The traveling body 7 that has conveyed the ordered food and drink 9 returns to the kitchen area C through the conveying surface 3 along the ordered food and drink conveying path 1a, 1b or 2 which runs from the kitchen area C to the serving area B. That is to say, the traveling body 7 is provided so as to move freely between the serving area B and the kitchen area C on the conveying surface 3 along the ordered food and drink conveying paths 1a, 1b and 2 which are formed as independent conveying paths.

Next, these three ordered food and drink conveying paths 1a, 1b and 2 are described. As shown in FIG. 1, the ordered food and drink conveying paths 1a, 1b and 2 are provided to run straight from the kitchen area C to the customer area A, passing through the openings, not shown, in the partition wall W In the kitchen area C, the ordered food and drink conveying path 2 is located at the center and the ordered food and drink conveying paths 1a and 1b are placed on the left and right of the ordered food and drink conveying path 2 close to each other.

Since the three ordered food and drink conveying paths 1a, 1b and 2 are placed close to each other, the ordered and prepared food and drink can be selected efficiently and placed on any of these ordered food and drink conveying paths from the same place.

Meanwhile, the ordered food and drink conveying path 2 is provided at the center of the rectangular serving area B in such a manner as to divide the serving area B into two as viewed from the top. The ordered food and drink conveying paths 1a and 1b are bent on the left or right so as to move away from the ordered food and drink conveying path 2 at the center in the vicinity of the partition wall W, and after that runs straight close to the inside of the looped conveying path 5. Furthermore, the ordered food and drink conveying paths 1a and 1b are bent towards the area G4 in the vicinity of the inside of the looped conveying path 5, and after that run along the looped conveying path 5.

That is to say, the ordered food and drink conveying path 1a has a first corner 10a (right curved) and a second corner 11a (left curved) as part of a curved path in the present invention close to the partition wall W, and the ordered food and drink conveying path 1b has a first corner 10b (left curved) and a second corner 11b (right curved) as part of a curved path in the present invention close to the partition wall W.

In addition, the section of the ordered food and drink conveying paths 1a and 1b between the kitchen area C and the first corners 10a and 10b, the section of the ordered food and drink conveying paths 1a and 1b between the first corners 10a and 10b and the second corners 11a and 11b, and the section of the ordered food and drink conveying paths 1a and 1b between the second corners 11a and 11b and the area G4 are straight paths 12a and 12b as described above.

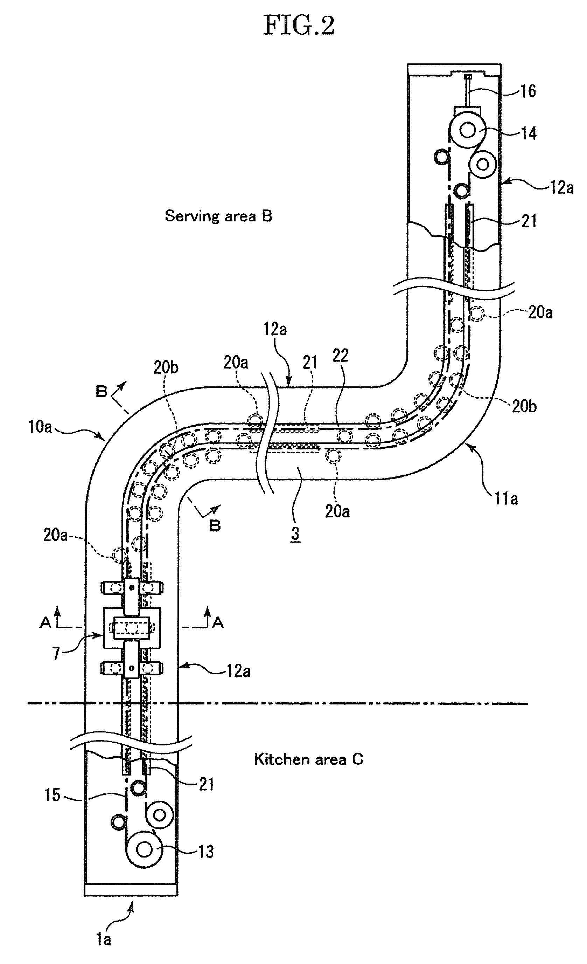

Next, these ordered food and drink conveying paths 1a, 1b and 2 as well as the traveling body 7 are described in detail in reference to FIGS. 2 to 8. Though the ordered food and drink conveying paths 1a, 1b and 2 have different forms, they share the same structure for allowing the traveling body 7 to travel. Therefore, only the ordered food and drink conveying path 1a is described below, and the descriptions of the other ordered food and drink conveying paths 1b and 2 are omitted. Furthermore, when the traveling body 7 is in the corners 10a and 11a of the ordered food and drink conveying path 1a and in the corners 10b and 11b of the ordered food and drink conveying path 1b, only the direction in which the below described first magnetic body 18 moves is opposite, and therefore only the description of the traveling body 7 in the first corner 10a of the ordered food and drink conveying path 1a is provided.

First, the structure of the ordered food and drink conveying path 1a for allowing the traveling body 7 to travel is described. As shown in FIG. 2, a drive sprocket 13 which rotates horizontally by means of a drive motor, not shown, is provided at the end of the ordered food and drink conveying path 1a on the kitchen area C side beneath the conveying surface 3, and a tension sprocket 14 is provided at the end on the serving area B side.

A drive belt 15, which is the conveying and driving body in the present invention, is looped around the drive sprocket 13 and the tension sprocket 14 at the two ends so that the drive belt 15 is driven through the rotation of the drive sprocket 13. Here, this tension sprocket 14 is provided with a tension adjusting portion 16 for adjusting the tension to the drive belt 15.

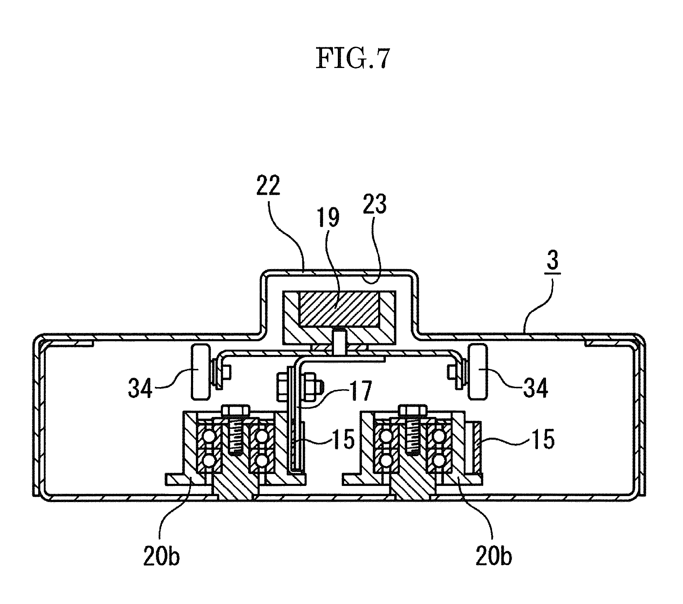

This drive belt 15 is looped and provided beneath the conveying surface 3 on which the traveling body 7 travels along the ordered food and drink conveying path 1a so that the drive belt 15 moves along the conveying surface 3. In addition, as shown in FIGS. 6 and 7, a belt bracket 17 in approximately L shape is attached to one portion of the drive belt 15.

The upper end of this belt bracket 17 is placed beneath the center of the conveying surface 3 in the direction of the width. Furthermore, a second magnetic body 19, which is the second connecting means in the present invention, is secured to the upper end of this belt bracket 17. It is desirable for this second magnetic body 19 to be made of a metal having ferromagnetism or a permanent magnet.

As shown in FIGS. 2, 6 and 7, the drive belt 15 is guided by a number of idlers 20a provided in the direction of conveyance so as to be freely slidable beneath the straight path 12a, and it is also guided by a number of idlers 20b provided in the first corner 10a and the second corner 11a with the same curvature as the first corner 10a and the second corner 11a so as to be freely slidable.

These idlers 20a and 20b are pivotally supported by an axis so as to be rotatable horizontally so that noise can be prevented from being made through the friction against the drive belt 15. In addition, a belt guide 21 for preventing the drive belt 15 from being removed between the idlers 20a and 20b is provided beneath the straight path 12a.

Furthermore, a rail 22 protrudes from the center of the ordered food and drink conveying path 1a at the center in the direction of the width of the conveying surface 3 along approximately the entirety in the longitudinal direction of the ordered food and drink conveying path 1a. Concretely, the conveying surface 3 is the upper surface of a metal plate, such as of aluminum or stainless steel, and the rail 22 is formed through pressing of this plate, and therefore the plate where the rail is formed has a conveying trench 23 in a C shape facing downwards in the cross section on the bottom side.

The above second magnetic body 19 is placed within this conveying trench 23, and this second magnetic body 19 moves along approximately the entirety of the ordered food and drink conveying path 1a within the conveying trench 23 when the drive belt 15 is driven.

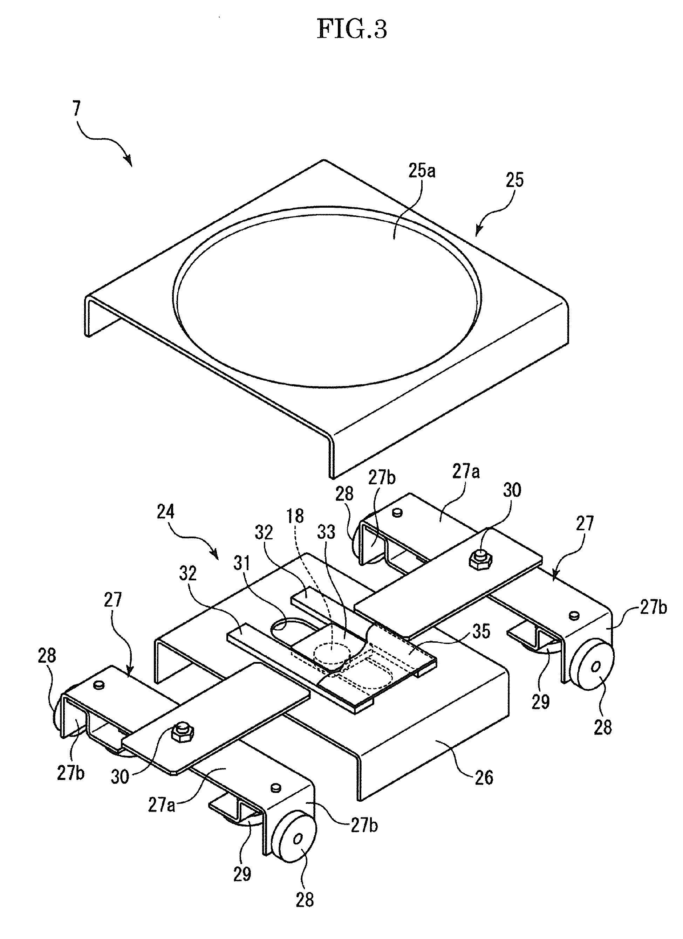

As shown in FIG. 3, the traveling body 7 is formed of a carrier 24 which runs on the conveying surface 3 and a tray 25 for the placement of a dish 6 on which an ordered food and drink 9 is placed and which is attached to the carrier 24 from the top. A recess 25a for the placement of a dish 6 is created on the upper surface of the tray 25 so that the dish 6 placed in this recess 25a can be prevented from falling off from the tray 25.

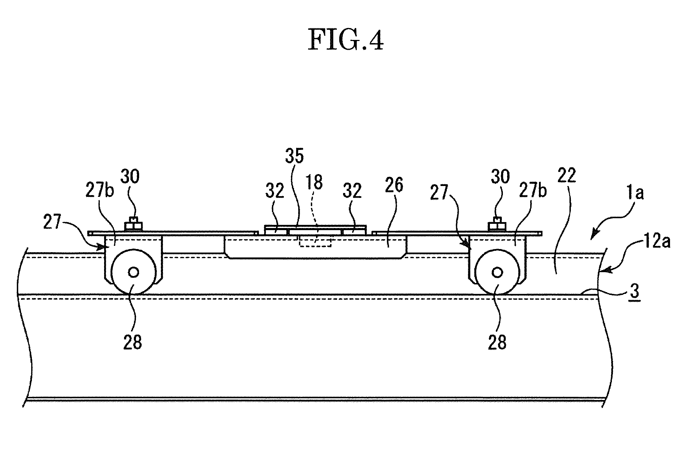

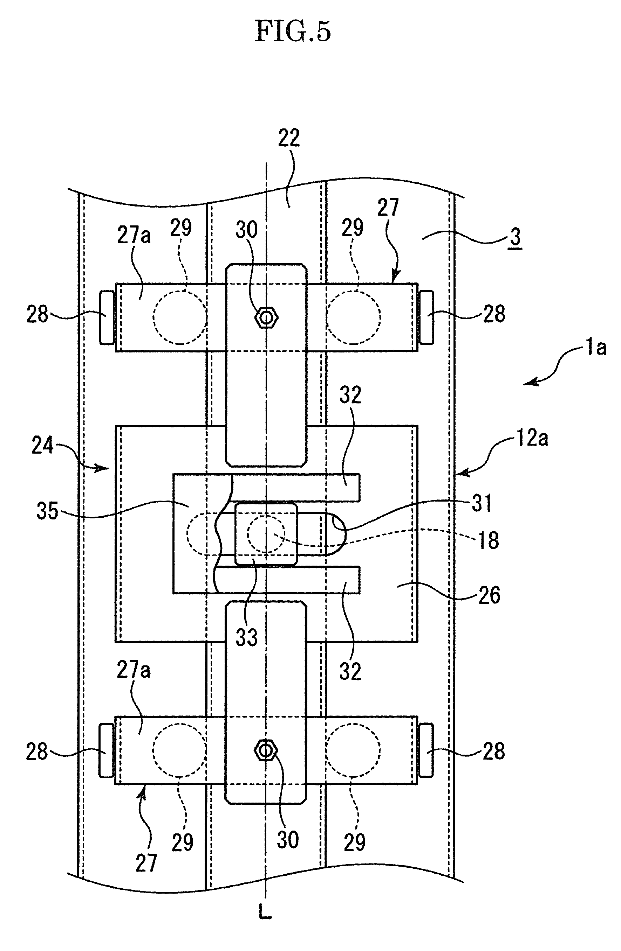

The carrier 24 is mainly formed of a base 26 to which the tray 25 is attached and wheel brackets 27 which are attached to portions of the base 26, the front end and the rear end. These wheel brackets 27, as shown in FIGS. 4 and 5, are in a C shape facing downward and formed of a horizontal plate 27a in rectangular form that is long in the direction of the width as viewed from the top and vertical plates 27b that extend from the left and right ends of the horizontal plate 27a towards the bottom.

Load wheels 28, which are wheels for allowing the traveling body 7 to travel on the conveying surface 3 in the present invention, are supported around an axis on the outside of the two vertical plates 27b. In addition, two orbital wheels 29, which are rotatable bodies in the present invention, are pivotally supported by the carrier 24 around an axis between the two vertical plates 27b so as to be freely rotatable horizontally. Concretely, these orbital wheels 29 are supported around an axis so as to be symmetrical between the left and right sides relative to a straight line within the space surrounded by the horizontal plate 27a and the two vertical plates 27b.

Furthermore, the distance between the two orbital wheels 29 is approximately the same as or slightly greater than the width of the rail 22 or the distance between the left side and the right side of the rail 22 on the conveying surface 3. When the traveling body 7 is placed on the conveying surface 3, the two orbital wheels 29 make contact with or are located in close vicinity of the rail 22 in the front and in the rear of the traveling body 7 so that the rail 22 is sandwiched from both sides in the direction of the width.

Thus, the orbital wheels 29 hold the rail 22 in the direction of the width in the front and in the rear of the traveling body 7 so that the traveling path for the traveling body 7 is restricted on the conveying surface 3, and in addition the traveling body 7 can be prevented from vibrating in the direction of the width. That is to say, these wheel brackets 27 and the orbital wheels 29 form the swaying preventing means in the present invention.

As shown in FIG. 5, these wheel brackets 27 are pivotally supported around axes in the front and in the rear end of the carrier 24 so as to be freely rotatable horizontally where the two axes 30 are provided along the center line L which divides the carrier 24 into two in the direction of the width. Furthermore, this center line L is located above the rail 22 which is at the center of the ordered food and drink conveying path 1a in the direction of the width, while the traveling body 7 is traveling along the straight path 12a of the ordered food and drink conveying path 1a.

In addition, a long hole 31, which is long in the direction of the width, is provided at approximately the center of the base 26 as viewed from the top so as to penetrate through the carrier 24 in the upward and downward directions. Guide pieces 32, which face in the direction of the width from the upper surface of the base 26, are provided in the front and rear of the long hole 31. These guide pieces 32 are provided parallel to the long hole 31 and have approximately the same width as the long hole 31.

In addition, a sliding piece 33, which is approximately square as viewed from the top, is provided between the front and rear guide pieces 32. The four sides of this sliding piece 33 have approximately the same length as the distance between the front and rear guide pieces 32 so that the sliding piece 33 can slide in the direction of the width above the long hole 31, while the front and the rear are guided by the two guide pieces 32.

A first magnetic body 18, which is the first connecting means in the present invention, is attached to the lower surface of this sliding piece 33. Either a second magnetic body 19 provided beneath the conveying surface 3 or the first magnetic body 18 attached to the traveling body 7 is formed of a ferromagnetic metal and the other is formed of a permanent magnet or both may be formed of a permanent magnet. Furthermore, the two are placed so that the different magnetic poles face each other with the conveying surface 3 in between in the case where the two are formed of a permanent magnet.

Here, guide wheels 34, which form a pair in the direction of the width, are provided in the upper end portion of the belt bracket 17 so as to make contact with the lower surface of the plate of which the upper surface is the conveying surface 3. These guide wheels 34 prevent the drive belt 15 from moving towards the first magnetic body 18 when the first magnetic body 18 and the second magnetic body 19, which are provided so as to face each other with the conveying surface 3 in between, are attracted to each other through magnetic force.

The first magnetic body 18 can move in the direction of the width within the long hole 31 when the sliding piece 33 slides in the direction of the width above the long hole 31. Here, the range within which the first magnetic body 18 moves in the direction of the width is regulated because the first magnetic body 18 may make contact with the left and right ends of the inner wall of the long hole 31. In addition, a support plate 35 for supporting the tray 25 from the bottom is attached between the front and rear guide pieces 32 when the tray 25 is attached to the carrier 24, and thus the long hole 31 and the sliding piece 33 are covered by the carrier 24 as viewed from the top, as shown in FIG. 5.

When the drive belt 15 is driven, the above described structure of the ordered food and drink conveying path 1a and the traveling body 7 allows the traveling body 7 to which the first magnetic body 18 that is driven by and connected to the second magnetic body 19 through magnetic force is attached to travel along the ordered food and drink conveying path 1a in the conveying surface 3.

Next, the operation of the traveling body 7 which travels on the conveying surface 3 is described. First, as shown in FIG. 5, the first magnetic body 18 is provided along the straight path 12a of the ordered food and drink conveying path 1a so as to face the second magnetic body 19 which moves within the conveying trench 23, and therefore is located in approximately the center of the long hole 31 which is along the center line L that connects the front and rear axes 30.

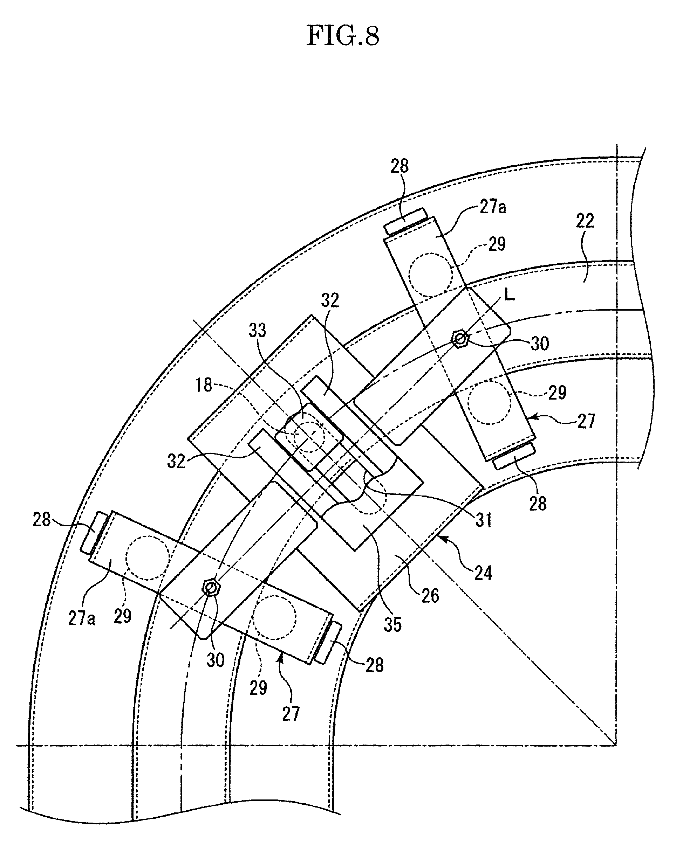

As shown in FIG. 8, when the traveling body 7 comes to the first corner 10a, the front wheel bracket 27 of the traveling body 7 starts rotating along the curve of the rail 22 in the first corner 10a, and then the wheel brackets 27 rotate around the axes 30 so that the orbital wheels 29 move along the rail 22 in the first corner 10a.

When the traveling body 7 moves in the first corner 10a, the amount of swaying and rotation is different between the front and rear wheel brackets 27 of the traveling body 7, and therefore there are different tracks of the inner wheels of the traveling body 7, and thus the center line L of the traveling body 7 moves in the first corner 10a inside the path through which the second magnetic body 19 moves (two-dotted chain line in FIG. 8).

At this time, the first magnetic body 18 is driven by and connected to the second magnetic body 19 through magnetic force, and therefore moves towards the outside of the first corner 10a within the long hole 31 relative to the traveling body 7 which moves with the center line L shifting towards the inside of the first corner 10a so as to maintain the position of facing the second magnetic body 19. That is to say, the first magnetic body 18 moves to follow the second magnetic body 19 through the traveling body 7.

When the traveling body 7 comes back to the straight path 12a from the first corner 10a, the traveling body 7 moves such that the center line L of the traveling body 7 is located above the center of the rail 22, and therefore the first magnetic body 18 moves towards the center of the long hole 31 within the long hole 31.

As described above, the first magnetic body 18 attached to the traveling body 7 moves to follow the second magnetic body 19 so that such a state that the second magnetic body 19 and the first magnetic body 18 are always connected when driven is maintained, and the traveling body 7 can travel stably even when there is a difference in the orbit through which the traveling body 7 and the drive belt 15 move.

As described above, the food and drink conveying device 1 according to the first embodiment has: an ordered food and drink conveying path 1a; a drive belt 15 provided along the ordered food and drink conveying path 1a; a traveling body 7 that can travel along the ordered food and drink conveying path 1a with an ordered food and drink 9 placed on top; and a first magnetic body 18 and a second magnetic body 19 for connecting the drive belt 15 to the traveling body 7 when the two are driven, and the food and drink conveying device 1 allows the traveling body 7 to travel along the ordered food and drink conveying path 1a by driving the drive belt 15, and the traveling body 7 is provided with orbital wheels 29 which hold the rail 22 in the direction of the width in order to prevent the traveling body 7 from swaying in the direction of the width, and thus the traveling body 7 can travel stably along the ordered food and drink conveying path 1a without having guide portions protruding from both sides of the ordered food and drink conveying path 1a along the ordered food and drink conveying path 1a, which would make customers feel uncomfortable.

In addition, the swaying preventing means is provided with orbital wheels 29 which are pivotally supported around an axis so as to be freely rotatable and which make contact with or are located in the vicinity of the rail 22 so that the traveling body 7 makes contact with the rail 22 through the orbital wheels 29, and thus abnormal noise can be prevented from being generated by the friction with the rail 22. In the case where the orbital wheels 29 are located in the vicinity of the rail 22, an orbital wheel 29 immediately makes contact with the rail 22 in order to prevent the traveling body 7 from swaying, and thus the traveling body 7 can travel with abnormal noise being suppressed.

In addition, the orbital wheels 29 are provided in two locations, front and rear, of the traveling body 7 so that the orbital wheels 29 can hold the rail 22 from both sides in two locations, front and rear, of the traveling body 7, and thus the traveling body 7 can be prevented from swaying in the direction of the width without fail.

In addition, the connecting means is made of the first magnetic body 18 and the second magnetic body 19 which are provided to the traveling body 7 and the drive belt 15, respectively, so that the traveling body 7 and the drive belt 15 are connected through magnetic force between the first magnetic body 18 and the second magnetic body 19, and thus it is not necessary to directly connect a bracket or the like for conveying the drive of the drive belt 15 to the traveling body 7 between the traveling body 7 and the drive belt 15, and therefore it is not necessary to provide a slit for allowing the bracket to move in the longitudinal direction of the conveying surface 3.

In addition, the traveling body 7 is positioned perpendicular to the drive belt 15, and thus the drive belt 15 is not positioned in the direction of the width of the traveling body 7, and therefore the ordered food and drink conveying path 1a can be made narrower.

In addition, the orbital wheels 29 provided in two locations, front and rear of the traveling body 7, are pivotally supported by the traveling body 7 around an axis so as to be rotatable horizontally so that the front wheel bracket 27 of the traveling body 7 starts rotating along the curve of the first corner 10a or the second corner 11a of the ordered food and drink conveying path 1a when the traveling body 7 comes to the first corner 10a or the second corner 11a of the ordered food and drink conveying path 1a, followed by the rear wheel bracket 27, and thus the traveling body 7 can travel while rotating smoothly.

### Second Embodiment

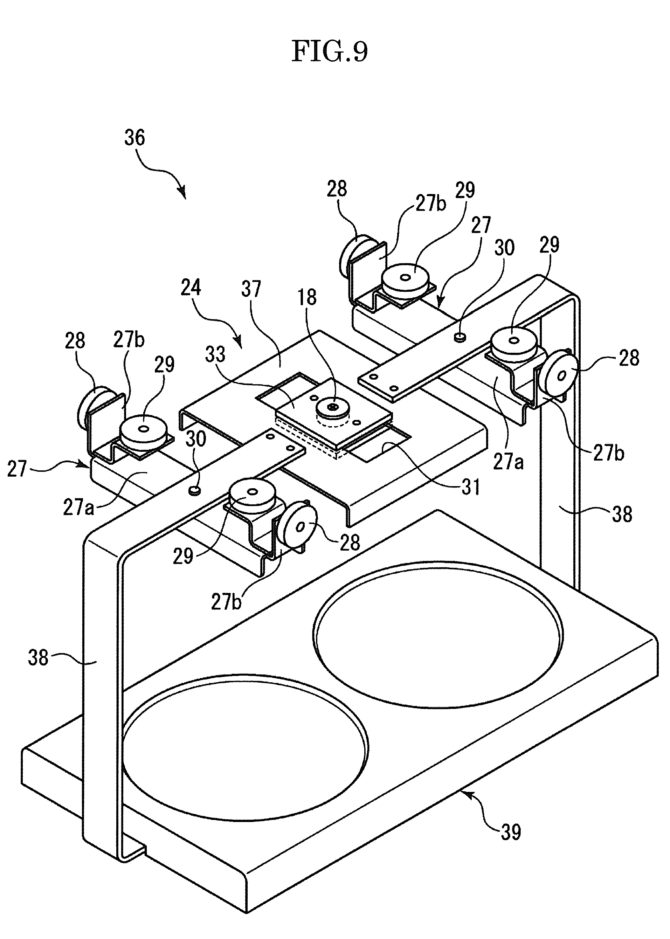

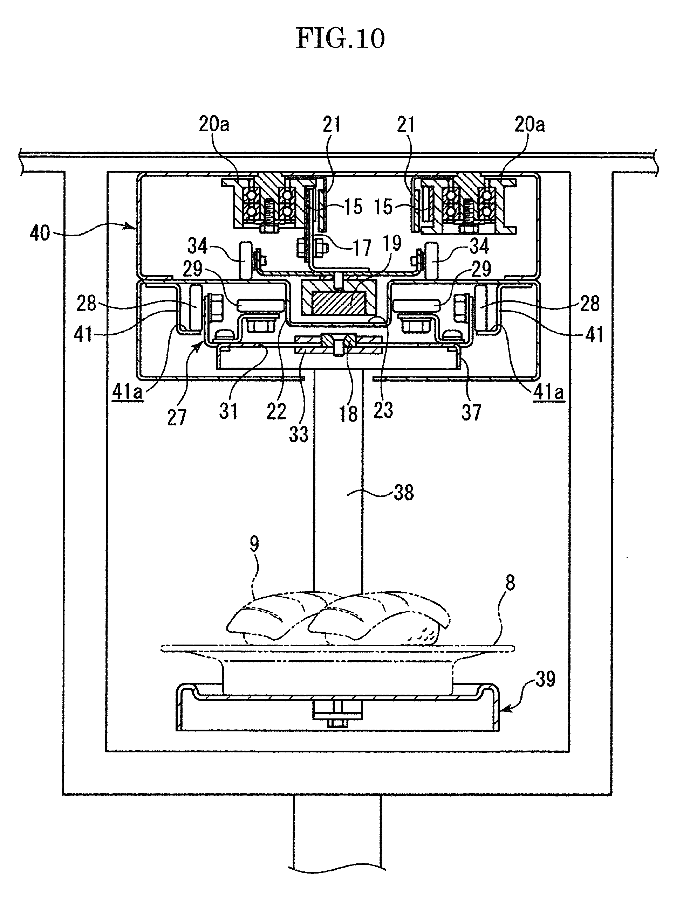

Next, the food and drink conveying device according to the second embodiment is described in reference to FIGS. 9 and 10. Here, the descriptions of the components having the same structure as in the above embodiment are not repeated.

The traveling body 7 travels on the conveying surface 3 of the ordered food and drink conveying path 1a in the food and drink conveying device 1 according to the first embodiment. In contrast, supports 38 are provided so as to extend downwards from the front end and the rear end of the base 37 of the traveling body 36, as shown in FIG. 9, and a tray 39 is attached between the front and rear supports 38 in the second embodiment. The traveling body 36 is attached to the ordered food and drink conveying path 40 having such a structure as to be inverted from the structure in the first embodiment so that the traveling body 36 can travel, as shown in FIG. 10, with a tray 39 hanging from the traveling body 36 and conveying an ordered food and drink 9. In this case as well, the same working effects as in the first embodiment can be gained.

In this case, it is necessary for the wheel brackets 27 in a C shape facing upwards to be attached with vertical plates 27b extending upwards from the left and right ends of horizontal plates 27a, and at the same time for conveying brackets 41 having a conveying surface 41a on which load wheels 28 engage and move from the left and right ends of the ordered food and drink conveying path 40 to be attached. In addition, the second magnetic body 19 is provided above the base 37, and therefore the first magnetic body 18 is provided on the upper surface of the sliding piece 33.

Though the two embodiments of the present invention are described in reference to the drawings, concrete structures of the invention are not limited to these embodiments and the present invention covers modifications and additions as long as the gist of the present invention is not deviated from.

For example, though the two embodiments are described with the food and drink being sushi, the invention is not limited to this and can be applied to various foods and drinks.

In addition, though the food and drink conveying device 1 is described as a device for conveying ordered food and drink 9 ordered by a customer in the two embodiments, it may be a continuous conveying device for continuously conveying food and drink which have been prepared in advance between the kitchen area C and the customer area A.

In addition, though the connecting means is described as magnetic bodies in the two embodiments, a slit may be created along approximately the entire length of the ordered food and drink conveying path 1a so that rods or pins from the drive belt 15, which are connecting means, may be engaged with the traveling body 7 through the slit, and the traveling body 7 may travel on the conveying surface 3 when the drive belt 15 is driven.

In addition, though the first magnetic body 18 is attached so as to be movable in the direction of the width within the long hole 31 of the base 26 in the two embodiments so that the second magnetic body 19 is secured to the upper end portion of the belt bracket 17 attached to the drive belt 15 and the first magnetic body 18 moves to follow the second magnetic body 19, the first magnetic body 18 may be secured to the base 26 and the second magnetic body 19 may be attached to the upper end portion of the belt bracket 17 so as to be movable in the direction of the width so that the second magnetic body 19 can move to follow the first magnetic body 18.

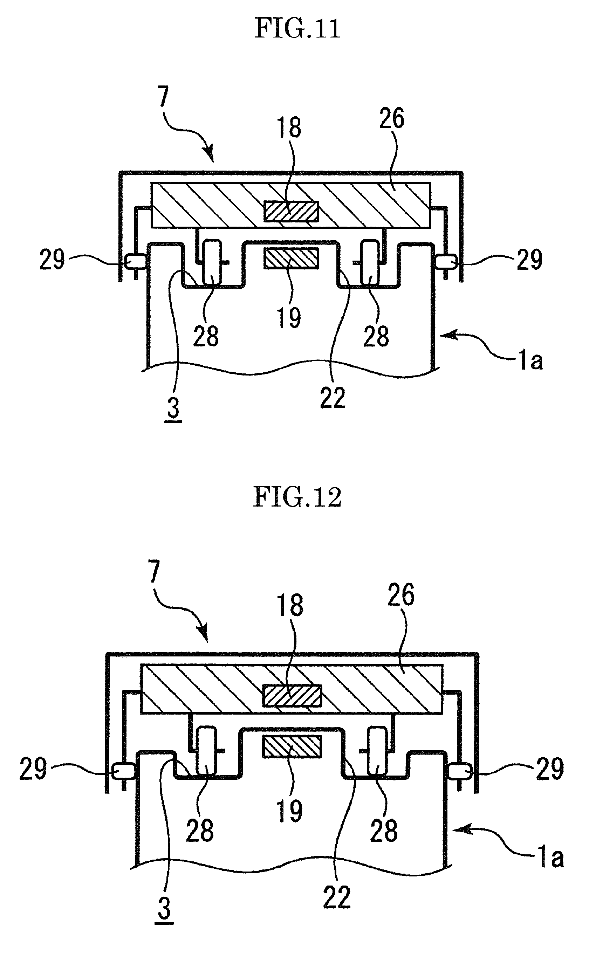

In addition, though the orbital wheels 29 are made to make contact with the rail 22 which protrudes from the ordered food and drink conveying path 1a at the center in the direction of the width in the first embodiment, the traveling body 7 may be formed so as to have the same width as the ordered food and drink conveying path 1a, as shown in FIG. 11, so that the left and right ends of the ordered food and drink conveying path 1a protrude upwards to approximately the same level as the rail 22 and orbital wheels 29 are provided on the left and right ends of the traveling body 7 so as to be positioned on the sides of the ordered food and drink conveying path 1a, and the orbital wheels 29 are made to make contact with the upper end on the outer surface of the ordered food and drink conveying path 1a, and thus, the stability of the traveling body 7 may be increased while traveling along the ordered food and drink conveying path 1a. In this case, as shown in FIG. 12, the protrusions from the left and right ends of the ordered food and drink conveying path 1a may be lower than the rail 22.

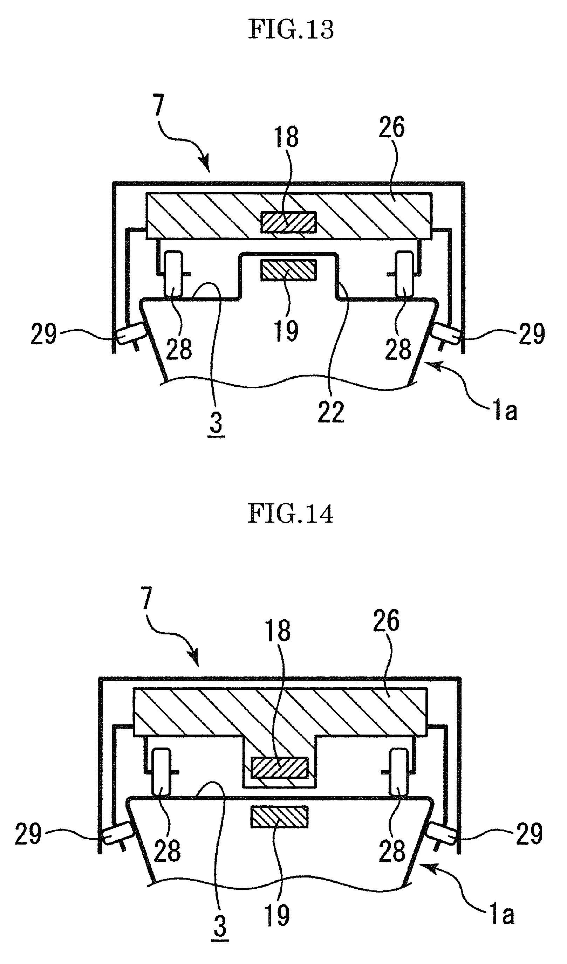

In addition, though the orbital wheels 29 are made to make contact with the rail 22 which protrudes from the center of the ordered food and drink conveying path 1a in the direction of the width, the traveling body 7 may be formed so as to have approximately the same width as the ordered food and drink conveying path 1a, as shown in FIG. 13 for example, so that the outer surface of the ordered food and drink conveying path 1a is tapered from the top to the bottom, and at the same time the orbital wheels 29 are provided to the traveling body 7 beneath the left and right sides so as to be placed on the sides of the ordered food and drink conveying path 1a, and the orbital wheels 29 are made to make contact with the outer surface of the ordered food and drink conveying path 1a at the same level of incline, and thus the traveling body 7 can be prevented from falling off from the ordered food and drink conveying path 1a. In this case, as shown in FIG. 14, the conveying surface 3 may be flat, and instead the first magnetic body 18 may protrude downwards from the traveling body 7.

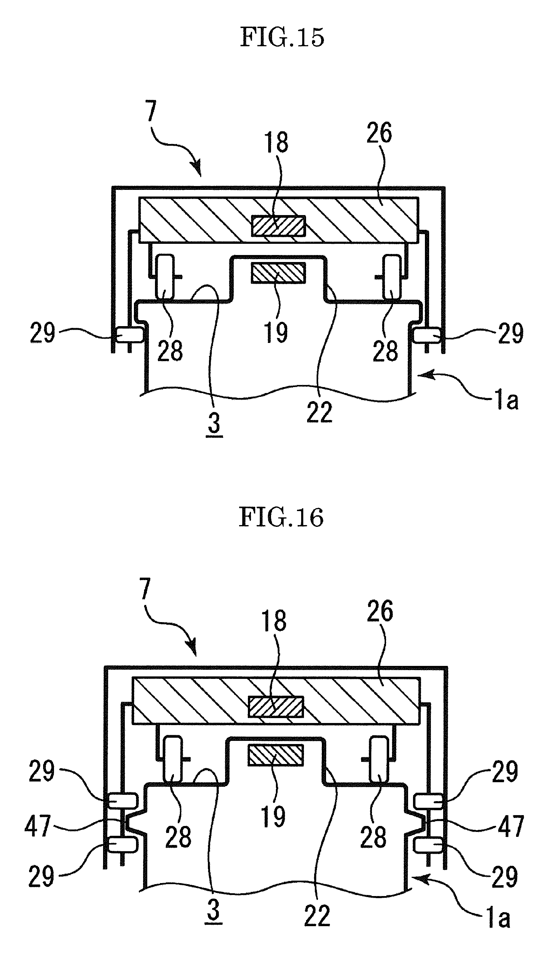

In addition, unlike the modifications shown in FIGS. 11 and 12, the traveling body 7 may be formed to have approximately the same width as the ordered food and drink conveying path 1a, as shown in FIG. 15 for example, and ribs 46 are provided on the left and right upper ends the ordered food and drink conveying path 1a so as to protrude in the direction of the width. The orbital wheels 29 provided from the left and right ends of the traveling body 7 are positioned so as to make contact with the sides of the ordered food and drink conveying path 1a beneath the two ribs 46. The orbital wheels 29 are engaged with the ribs 46 so that the traveling body 7 can be prevented from falling off from the ordered food and drink conveying path 1a.

In addition, unlike the modification shown in FIG. 15, the traveling body 7 is formed so as to have approximately the same width as the ordered food and drink conveying path 1a, as shown in FIG. 16 for example, and ribs 47 which protrude from the left and right of the ordered food and drink conveying path 1a in the direction of the width may be provided so as to be positioned to make contact with the sides of the ordered food and drink conveying path 1a with the ribs 47 being held by the two orbital wheels 29 from the top and the bottom on the left and right sides of the traveling body 7, and thus the traveling body 7 can be prevented from swaying around a horizontal axis.

Here, the modifications shown in FIGS. 13 to 16 may be modified such that the ordered food and drink conveying path 1a and the traveling body 7 are inverted and the traveling body 7 hangs from the ordered food and drink conveying path 1a as in the second embodiment.

### Explanation of Symbols

- 1: food and drink conveying device
- 1a, 1b, 2: ordered food and drink conveying path (traveling lane)
- 3: conveying plane
- 7: traveling body
- 9: ordered food and drink
- 10a, 10b: first corner (curved path)
- 11a, 11b: second corner (curved path)
- 12a, 12b: straight path
- 15: drive belt (conveying and driving body)
- 18: first magnetic body (first connecting means)
- 19: second magnetic body (first connecting means)
- 22: rail
- 24: carrier
- 25: tray
- 26: base
- 27: wheel bracket (swaying preventing means)
- 28: load wheel
- 29: orbital wheel (rotatable body, swaying preventing means)
- 31: long hole
- 34: guide wheel
- 36: traveling body
- 37: base
- 38: support
- 39: tray
- 40: ordered food and drink conveying path
- 41a: conveying surface
- L: center line

## Claims

1. A food and drink conveying device, comprising: a traveling lane; a conveying and driving body provided along said traveling lane; a traveling body that can travel along said traveling lane with food and drink placed on the traveling body; and a connecting means for connecting said conveying and driving body to said traveling body in order to drive said traveling body, so that said traveling body travels along said traveling lane when said conveying and driving body is driven, **characterized in that**
said traveling body comprises a swaying preventing means for preventing said traveling body from swaying in the direction of the width by holding said traveling lane from both sides in the direction of the width.

2. The food and drink conveying device according to Claim 1, **characterized in that** said swaying preventing means comprises a rotatable body which is pivotally supported around an axis so as to be freely rotatable and is placed so as to make contact with or be in the proximity to said traveling lane.

3. The food and drink conveying device according to Claim 1 or 2, **characterized in that** two swaying preventing means, including said swaying preventing means, are provided in the front and rear of said traveling body.

4. The food and drink conveying device according to any of Claims 1 to 3, **characterized in that** said connecting means is magnetic bodies provided in said traveling body and said conveying and driving body, respectively.

5. The food and drink conveying device according to any of Claims 1 to 4, **characterized in that** said traveling body is placed in the direction perpendicular to said conveying and driving body.

6. The food and drink conveying device according to any of Claims 3 to 5, **characterized in that** said swaying preventing means provided in two locations, in the front and rear of said traveling body, are individually pivotally supported around an axis so as to be rotatable in the direction parallel to said traveling body.
